# EUROPEAN PATENT SPECIFICATION

(11) **EP 3 752 091 B1**
(45) Date of publication and mention of the grant of the patent: **09.03.2022**
(21) Application number: 19706451.2
(22) Date of filing: 14.02.2019
(51) Int. Cl.: A61C 7/06, A61C 13/00, B33Y 80/00, B33Y 10/00, A63F 13/00

(54) **PROCESS FOR MANUFACTURING CUSTOMIZED FACEMASKS FOR THE TREATMENT OF MALOCCLUSION**
VERFAHREN ZUR HERSTELLUNG VON KUNDENSPEZIFISCHEN GESICHTSMASKEN ZUR BEHANDLUNG VON MALOKKLUSIONEN
PROCÉDÉ DE FABRICATION DE MASQUES FACIAUX PERSONNALISÉS POUR LE TRAITEMENT DE MALOCCLUSION

(30) Priority: 15.02.2018 IT 201800002713
(43) Date of publication of application: 23.12.2020
(73) Proprietor: Università degli Studi di Siena, 53100 Siena (IT); Universita' Degli Studi di Firenze, 50121 Firenze (IT)
(72) Inventor: GORACCI, Cecilia, 53100 Siena (IT); MARTI, Patrizia, 53100 Siena (IT); SIRIZZOTTI, Matteo, 53100 Siena (IT); VICHI, Alessandro, Portsmouth, Hampshire PO1 2QG (GB); FRANCHI, Lorenzo, 50121 Firenze (IT)
(74) Representative: Leone, Mario
(86) International application number: PCT/EP2019/053632
(87) International publication number: WO 2019/158627

(56) References cited:
- WO-A1-2007/112112
- WO-A1-2016/012970
- DE-A1- 2 803 560
- KR-B1- 101 667 753
- US-A1- 2018 028 772

## Description

The present invention is related to a process for the manufacturing of facemasks, in particular customized facemasks for maxillary protraction, also known as reverse pull headgears, to be used in the treatment of a malocclusion, namely the Class III malocclusion, in children.

A malocclusion is a misalignment or incorrect relation between the teeth of the two dental arches when they approach each other as the jaws close. Depending on the sagittal relations of teeth and jaws, malocclusions can be divided mainly into three types according to the classification system defined by Edward Angle, who is considered the father of modern orthodontics.

Class III malocclusion or mesiocclusion (prognathism, Anterior crossbite, negative overjet, underbite) occurs when the mesiobuccal cusp of the maxillary first molar lies posteriorly to the mesiobuccal groove of the mandibular first molar.

Class III malocclusion has long been considered a complicated maxillofacial disorder, involving a concave profile that results from retrusion of the maxilla, prognathism of the mandible or a combination of the two [1]. At the dental level, this skeletal relationship reflects into the prominence of the lower arch relative to the upper arch, in the most severe cases also with the inversion of the anterior bite [1].

The prevalence of Class III malocclusions has been reported to range between 5% and 15% of the population, depending on the region and the ethnic group [1-3]. A skeletal Class III relationship between upper and lower jaw is also typically present in congenital craniofacial deformities, such as cleft lip and palate, Down's syndrome, achondroplasia.

Treating Class Ills early, when the circum-maxillary sutures are still immature [4-6], generally before age 10 [2], has been advocated to enhance the contribution of the orthopedic effect to the overall management of the malocclusion, improve dental occlusion and facial esthetics, reduce the need for future orthognathic surgery [1, 4].

Several appliances have been utilized in the early treatment of Class III malocclusions [2]. However, the maxillary protraction facemask is the preferred appliance when correction of a maxillary retrusion, the most common contributing component of a Class III malocclusion [7], is needed. The high-quality evidence provided by several recent systematic reviews of the literature and metaanalyses has confirmed that early facemask therapy is effective at improving the maxillo-mandibular relationship in Class III malocclusions, by enhancing forward growth of the mandible and limiting mandibular growth [1, 2, 4, 7-10].

Generally, facemasks currently available consist of a quadrangular metal framework or of a single midline stainless steel rod, to which a forehead pad and a chin pad are connected.

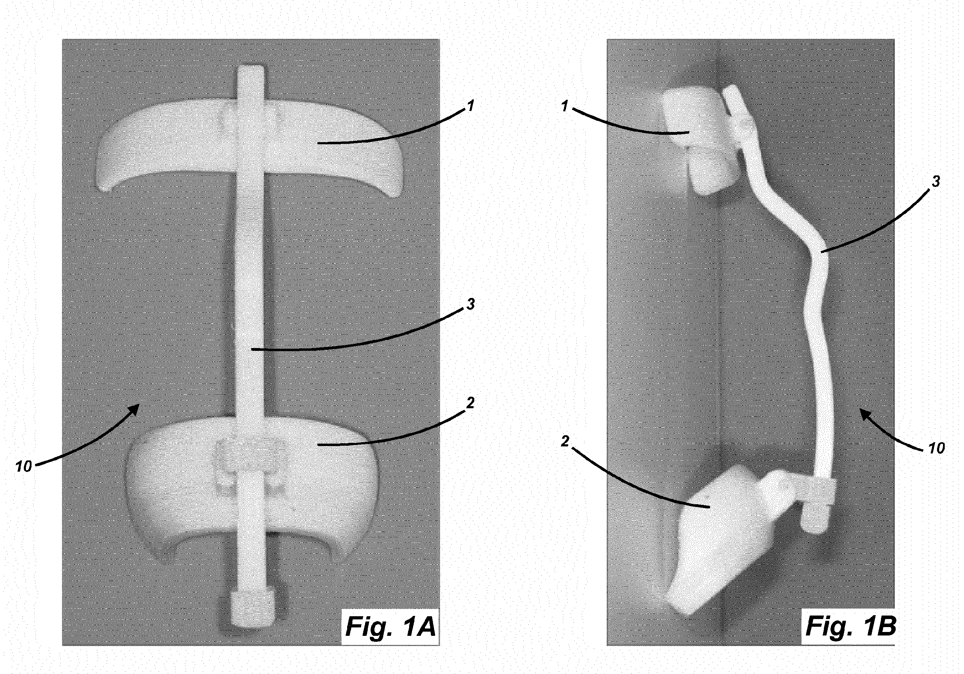

The 'Petit' facemask, featuring the midline rod, is preferred over the type with the framework ('Delaire' mask), as the latter may interfere with sleep, is challenging for children wearing eyeglasses [11], and does not allow mouth opening. Facemasks frontal and mental pads are made from hard acrylic resin lined with a soft closed-cell foam on the side contacting the skin. The pads are only available in standardized shapes and in two sizes. In order to apply a forward traction to the maxilla, heavy elastics, transmitting a force as high as 500 grams per side [12], are attached from the intraoral anchorage system, most often provided by a rapid maxillary expansion appliance, to a cross bar extending in front of the mouth (Figure 1).

It is clear that the effectiveness of facemask therapy heavily depends on patient's compliance with the recommended wearing time, possibly ranging between 14 hours and 24 hours a day [13]. However, currently marketed standardized facemasks can be unaesthetic and uncomfortable [13]. In a survey assessing acceptability and attractiveness of intra- and extra-oral orthodontic appliances, facemask was rated as the least acceptable device [14]. Beside esthetics, children very often complain about facemask bulkiness and instability, consequently providing so poor cooperation that treatment success can be compromised.

Poor patient acceptance of the appliance is not the only problem encountered during facemask treatment. The occurrence of skin irritations on forehead and chin has often been observed, due to uneven pressure by the standard anchorage pads [15]. Moreover, a poorly fitting standard chin cup is at risk of causing gingival recession of the lower incisors, if accidentally displaced during wear. Limitations in fit and comfort of the marketed standard facemasks become particularly evident when they have to be adapted to very small children or children affected by craniofacial deformities.

Different procedures have previously been proposed to provide customized frontal and mental facemask pads [15-17]. However, they have involved taking a plaster [16] or an alginate [17] impression of the patient's face, that can be an unpleasant experience for the child.

WO2016/012970 A1 discloses a process for manufacturing facemasks which are not particularly customized, but they include one or more sensors for detecting and/or measuring the force exerted by the traction portions.

In this connection, the aim of the presented invention is to devise a process for manufacturing customized facemasks for the treatment of Class III malocclusions that can overcome the drawbacks shown in the prior art.

This aim is achieved by a process for manufacturing customized facemasks for the treatment of malocclusion as defined in appended claim 1. Further details of the present invention are referred in the accompanying dependent claim.

The process according to the invention is based on the acquisition of 3D digital images of the patient's forehead and chin. In particular, impressions of the forehead and the chin are obtained using materials that are commonly utilized in dentistry for recording intraoral impressions. Subsequently, a 3D scan of the forehead and chin impressions is achieved.

It is understood that, alternatively, a 3D digital camera, or a facial scanner can be used for the same purposes. However, such a process involves very expensive and complex equipments, which are not generally available everywhere, and especially in orthodontics cabinets.

In particular, dentists are not requested to possess any equipments like 3D scanners, multiple image or video cameras and digital reconstruction software, dot or line scans from laser imaging, pattern laser photography, stereo photography, to handle the preparation of customized facemasks. All that is requested from a dentist is to record impressions of only the forehead and chin areas of interest, using a material which is already present in the orthodontics cabinet and whose handling is already mastered by the dentist himself.

A facial scanning is usually used to scan the whole face surface, to collect data for printing masks covering the whole patient's face and sealing the face area, e.g. for the treatment of sleep apnea, as exemplarily known from US 2018/028,772 A1, and certainly not for forehead and chin only. Then, it should be noted that recording an impression of the entire face would be a either rather unpleasant and experience for a child.

3D images obtained from the corresponding impressions can then be used for 3D printing the corresponding forehead and chin pads. In this connection, the customized pads can be adapted to receive suitable temperature and pressure sensors.

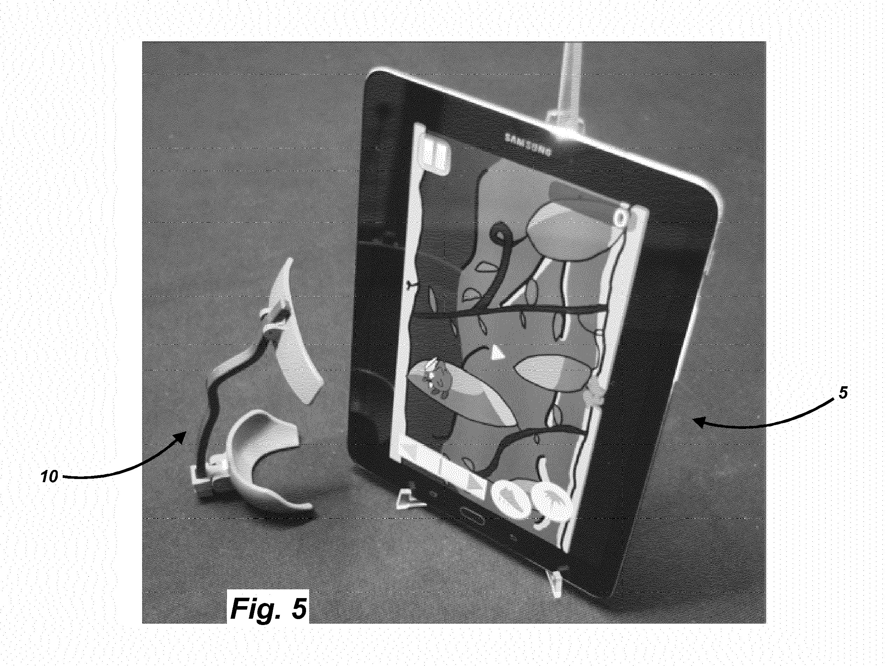

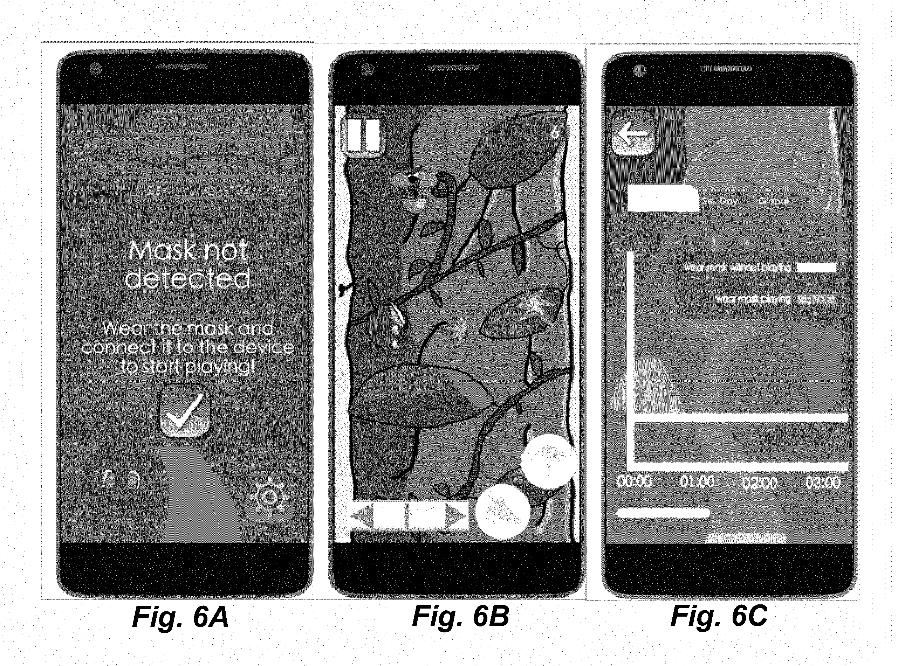

Such sensors can be linked to an application for tablets and smartphones which will include a videogame designed to enhance patients' compliance with wearing the facemask, in line with the new concepts of 'gamification' (see Figure 5, 6A to 6C). It was indeed demonstrated by previous studies on standard facemasks equipped with temperature sensors inside the frontal pad, as well as on other sensorized removable appliances, that the awareness of being monitored did not result in patients' adherence to the doctor's recommendations for wear time [18, 19].

Conversely, the 'gamification' approach aims to enhance children cooperation by promoting a virtuous competition among the facemask users, which will be linked in a worldwide virtual community. Characters, graphics, and strategies of the videogame can be designed to meet preferences and educational needs of the young patients (Figures 5, 6A to 6C).

The process for manufacturing customized facemasks for the treatment of malocclusions of this invention will be disclosed hereinafter with reference to a preferred embodiment thereof, given with exemplificative and no limitative purpose in connection with the annexed drawings wherein:
- Figure 1A shows a frontal view of a facemask according to the present invention;
- Figure 1B shows a side view of the facemask of Figure 1A;
- Figure 2 shows a forehead impression of a patient, which can be scanned to obtain a 3D digital image, usable through a 3D printer to print a forehead pad;
- Figure 3 shows a chin impression of a patient, which can be scanned to obtain a 3D digital image, usable through a 3D printer to print a chin pad;
- Figure 4 shows a side view of a patient, wherein the profile line of the face is detected, and a 3D model view of a midline rod obtained from said detection;
- Figure 5 shows a perspective view of a facemask according to the invention, and of a tablet linked to the facemask sensors; and
- Figures 6A, 6B and 6C illustrate different screenshot of a smartphone application linked to the facemask sensors.

The process for manufacturing customized facemasks, in particular for the treatment of Class III malocclusions, comprises a step of acquiring 3D images of the patient's forehead and chin, to appropriately model the forehead and chin pads in the facemask. The facemask can then be connected to an intraoral appliance by means of elastic bands.

In this connection, process for manufacturing customized facemasks 10 comprises the step of assembling said forehead and chin pads 1, 2 into a facemask featuring a facial frame providing a retention to elastic bands meant to be connected to an intraoral appliance.

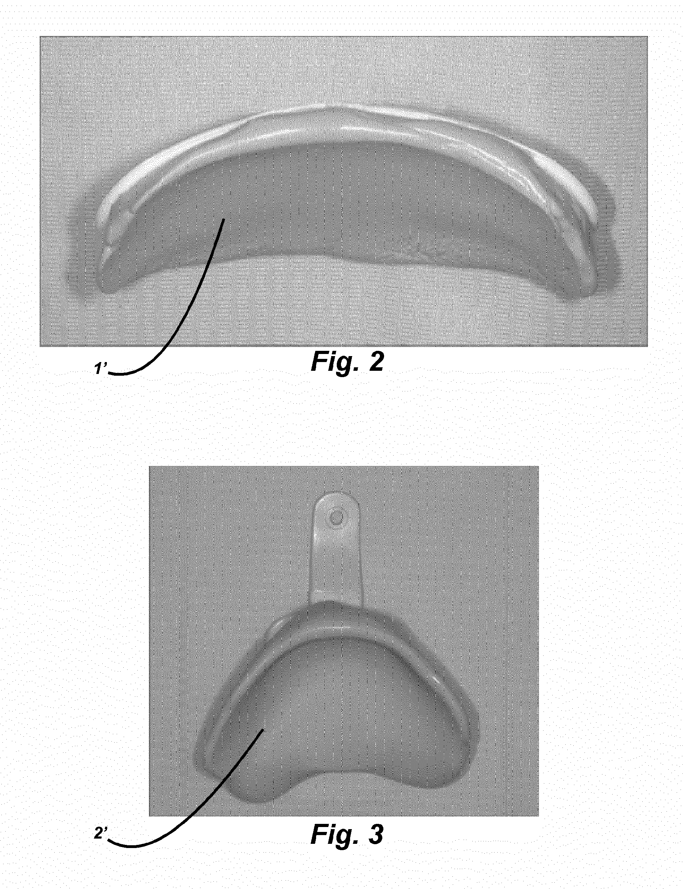

In particular the facemask 10 comprises customized forehead and chin pads, mounted onto a customized midline rod. The midline rod provides retention to elastic bands. As mentioned before, the 3D image is acquired by scanning forehead and chin impressions 1' and 2' of the anatomic structures of interest (Figures 2, 3), recorded with materials commonly used in dentistry for intraoral impressions.

Thereafter, onto the digital images of forehead and chin the corresponding pads can be custom-designed using an appropriate software for 3D digital modelling. Finally, the 3D digital models of the pads can be produced by a 3D-printer.

The customized frontal and mental pads are assembled together with a customized midline rod into the facemask 10.

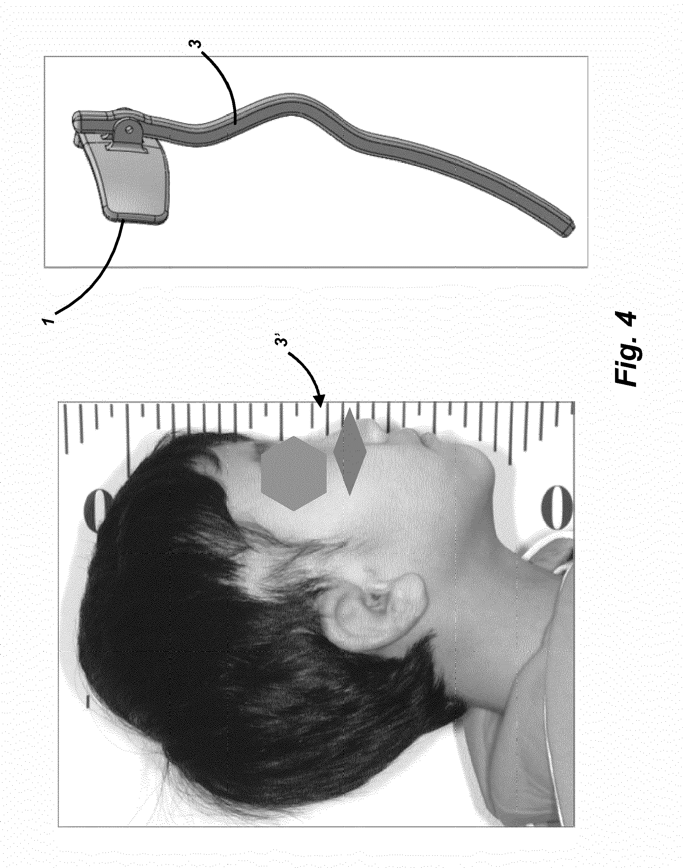

In this connection, according to the present process, a patient's side picture is shot to detect the profile line 3' of the patient (Figure 4), and the midline rod 3 is shaped according to said profile line.

Therefore, the midline rod is customized in length, curvature, and position of the retentions for elastic bands by modelling it with a software onto a digital photograph of the patient's face.

The midline rod features a retentions for the elastic bands at the level of the patient's mouth, providing retention to elastic bands that are to be connected to an intraoral appliance. The elastic bands apply a forward traction to the intraoral appliance while transmitting, through the midline rod, a compressive force onto the frontal and mental pads, that act as supports. The sliding of the chin pad along the midline rod allows the patient to open and close the lower jaw while wearing the facemask 10.

The application of 3D-modelling and 3D-printing technologies prompt a breakthrough in the design of the maxillary protraction facemask and consequently enhance patients' acceptance of the appliance and treatment's outcome.

Firstly, customization of the chin and forehead pads is expected to result into good fitting, better stability and even pressure distribution over chin and forehead, thus limiting the chance for skin irritation and the risk of gingival recessions.

In addition to individualized morphology, also appropriateness of the pad material can contribute to the overall comfort of the facemask. A material suitable for the above purpose is a biocompatible, transparent 3D-printed photopolymer named. A good candidate for this polymer is the product MED610, by Stratasys Ltd. The polymer is adequate for prolonged skin contact and has five medical approvals including cytotoxicity, genotoxicity, delayed type hypersensitivity, irritation and United States Pharmacopeia (USP) plastic class VI.

Additionally, 3D-printable silicones have been developed for the fabrication of facial prostheses and may be adequate also to produce customized facemasks.

Other 3D-printable biocompatible polymers possibly applicable to the production of the customized facemask components are Polyamide 10, Polyamide 11, and Polyamide 12.

Moreover, different allergy-free textiles can be tested as liners of the inner surface of the mental and frontal pads, with the aim of preventing irritations even of the most sensitive skin types.

For fabrication of the facemask midline rod 3, Polyamide 12 is used through a 3D printing process. Polyamide 12 makes the rod lighter and less evident, as compared with the .075" stainless steel used in currently marketed facemasks. Also, the sliding mechanism of the chin cup can be cushioned in order to ease opening and closing movements of the mandible.

In the process of 3D-printing, electronic sensors measuring pressure and temperature can be incorporated respectively into the chin and the forehead pads to monitor patient compliance, as well as to create a database of appliance wear-times useful for research purposes. Sensors will also be wirelessly linked to an application for tablets (Fig. 5) and smartphones 5 (Figs. 6A to 6C), which will include a videogame designed to enhance patients' compliance with wearing the facemask.

The longer the child will wear the facemask 10, the further he/she will advance in the game, as illustrated through Figures 6A to 6C. The introduction of a gamification strategy into the management of facemask treatment is truly innovative and wanted, as previous studies on the insertion of temperature sensors inside the frontal pad of standardized facemasks have demonstrated that the awareness of being monitored did not result in patients' full adherence to the doctor's recommendations regarding wear time.

The 'agonistic' drive is expected to represent an additional motivation for the patient, favoring treatment success.

It is also unprecedented the idea to insert a pressure sensor into the mental pad of the facemask, as so far only temperature sensors have been used for monitoring purposes.

Through the above described process, it is possible to achieve customized facemasks which, in addition to the above highlighted advantages, show a remarkable difference in weight with respect to the currently known facemasks.

To the above-described process for manufacturing customized facemasks for the treatment of malocclusion a person skilled in the art, with the purpose of satisfying additional and contingent needs, could introduce several additional modifications and variants, however all comprised within the protective scope of the present invention, as defined by the enclosed claims.

### Bibliography

1. Woon S.C., Thiruvenkatachari B. - Early orthodontic treatment for Class III malocclusion: A systematic review and meta-analysis. - Am. J. Orthod. Dentofacial Orthop. 2017; 151(1):28-52.
2. Watkinson S., Harrison J.E., Furness S., Worthington H.V. - Orthodontic treatment for prominent lower front teeth (Class III malocclusion) in children - Cochrane Database Syst Rev. 2013 30; (9):CD003451.
3. Li C., Cai Y., Chen S., Chen F. - Classification and characterization of class III malocclusion in Chinese individuals - Head Face Med. 2016 Nov 7; 12(1):31.
4. Mandall N., Cousley R., Di Biase A., Dyer F., Littlewood S., Mattick R., Nute S.J., Doherty B., Stivaros N., McDowall R., Shargill I., Worthington H.V. - Early class III protraction facemask treatment reduces the need for orthognathic surgery: a multi-centre, twoarm parallel randomized, controlled trial - J. Orthod. 2016 Sep; 43(3):164-75.
5. Angelieri F., Franchi L., Cevidanes L.H.S., Hino C.T., Nguyen T., McNamara J.A. Jr. - Zygomaticomaxillary suture maturation: A predictor of maxillary protraction? Part I - A classification method - Orthod Craniofac Res. 2017 May; 20(2):85-94.
6. Angelieri F., Ruellas A.C., Yatabe M.S., Cevidanes L.H.S., Franchi L., Toyama-Hino C., De Clerck H.J., Nguyen T., McNamara J.A. Jr. - Zygomaticomaxillary suture maturation: Part II-The influence of sutural maturation on the response to maxillary protraction - Orthod. Craniofac. Res. 2017 Aug; 20(3):152-163.
7. Zhang W., Qu H.C., Yu M., Zhang Y. - The effects of maxillary protraction with or without rapid maxillary expansion and age factors in treating Class III malocclusion: A Meta-Analysis. PLoS One. 2015 Jun 11; 10(6):e0130096.
8. Smyth R.S.D., Ryan F.S.. Early treatment of class III malocclusion with facemask. Evid Based Dent. 2017 22; 18(4):107-108.
9. Foersch M., Jacobs C., Wriedt S., Hechtner M., Wehrbein H. - Effectiveness of maxillary protraction using facemask with or without maxillary expansion: a systematic review and meta-analysis. Clin. Oral Investig. 2015; 19(6):1181-92.
10. Cordasco G., Matarese G., Rustico L., Fastuca S., Caprioglio A., Lindauer S.J., Nucera R. - Efficacy of orthopedic treatment with protraction facemask on skeletal Class III malocclusion: a systematic review and meta-analysis. Orthod. Craniofac. Res. 2014; 17(3):133-43.
11. Proffit W. R., Fields H. W., Jr., Sarver D. M. Contemporary Orthodontics. Philadelphia, PA, USA: Elsevier Health Sciences; 2014.
12. Yepes E., Quintero P., Rueda Z.V., Pedroza A. - Optimal force for maxillary protraction facemask therapy in the early treatment of class III malocclusion. Eur. J. Orthod. 2014; 36(5):586-94.
13. Stocker B., Willmann J.H., Wilmes B., Vasudavan S., Drescher D. - Wear-time recording during early Class III facemask treatment using TheraMon chip technology - Am. J. Orthod. Dentofacial Orthop. 2016; 150(3):533-40.
14. Abu Alhaija E.S., Karajeh M.A. - Acceptability and attractiveness of intra- and extra-oral orthodontic appliances - Int. J. Orthod. Milwaukee. 2013; 24:11-7.1.
15. Cacciatore G., Poletti L., Ghislanzoni L.H. - A chairside customized chin cup - J. Clin. Orthod. - 2013; 47(6):352.
16. Turley P.K. - Orthopedic correction of Class III malocclusion with palatal expansion and custom protraction headgear - J. Clin. Orthod. 1988; 22(5):314-25.
17. Orton H.S., Noar J.H., Smith A.J. - The customized facemask - J. Clin. Orthod. 1992; 26(4):230-5.
18. Arreghini A., Trigila S., Lombardo L., Siciliani G. - Objective assessment of compliance with intra- and extraoral removable appliances - Angle Orthod. 2017; 87:88-95.
19. Pauls A., Nienkemper M., Panayotidis A., Wilmes B., Drescher D. - Effects of wear time recording on the patient's compliance - Angle Orthod. 2013; 83:1002-1008.

## Claims

1. Process for manufacturing customized facemasks, especially for the treatment of Class III malocclusions comprising the following steps:
• producing respective impressions (1', 2') of patient's forehead and chin, to record the anatomic structure thereof, using impression materials commonly utilized in dentistry for intraoral impressions;
• producing respective 3D digital images of a patient's forehead and chin through a 3d-scanning of said forehead and chin impressions (1', 2');
• 3D printing of customized forehead and chin pads (1, 2);
• detecting patient's side profile line (3') from a side picture of patient's face;
• 3D printing of a midline rod modelled according to said profile line; and
• assembling said forehead and chin pads and said midline rod into a facemask featuring a facial frame providing retention to elastic bands meant to be connected to an intraoral appliance,
wherein, in the forehead pad (1) a temperature sensor is inserted while a pressure sensor is embedded into the chin pad (2).

2. Process for manufacturing customized facemasks according to claim 1, wherein said forehead and chin pads (1, 2) are 3D-printed using a biocompatible, transparent, 3D-printable photopolymer.

3. Process for manufacturing customized facemasks according to claim 1, wherein said forehead and chin pads (1, 2) are 3D-printed using 3D-printable silicones.

4. Process for manufacturing customized facemasks according to claim 1, wherein said forehead and chin pads (1, 2) are 3D-printed using 3D-printable Polyamide 10, Polyamide 11, Polyamide 12.

5. Process for manufacturing customized facemasks according to claim 2, wherein said midline rod (3) is 3D printed using Polyamide 12.

6. Process for manufacturing customized facemasks according to claim 1, wherein the chin pad (2) includes a cushioned sliding mechanism, in order to ease opening and closing movements of the mandible.

7. Process for manufacturing customized facemasks according to claim 1, wherein said sensors are linked to an application for tablets and smartphones including a videogame designed to enhance patients' compliance with wearing the facemask.

## Patentansprüche

1. Verfahren zur Herstellung individualisierter Gesichtsmasken, insbesondere zur Behandlung von Klasse III Malokklusionen, aufweisend die folgenden Schritte:
• Herstellen entsprechender Abdrücke (1', 2') der Stirn und des Kinns des Patienten, um deren anatomische Struktur aufzuzeichnen, unter Verwendung von Abdruckmaterialien, die üblicherweise in der Zahnheilkunde für intraorale Abdrücke verwendet werden;
• Erzeugen entsprechender digitaler 3D-Bilder der Stirn und des Kinns eines Patienten durch ein 3D-Scannen der Stirn- und Kinnabdrücke (I', 2');
• 3D-Druck von individuellen Stirn- und Kinnpolstern (1, 2);
• Erfassen der Seitenprofillinie (3') des Patienten aus einem Seitenbild des Gesichts des Patienten;
• 3D-Druck eines Mittellinienstabs, der gemäß der Profillinie modelliert wurde; und
• Zusammenbauen der Stirn- und Kinnpolster und des Mittellinienstabs zu einer Gesichtsmaske mit einem Gesichtsrahmen, der eine Festhaltung an elastischen Bändern bereitstellt, die dazu gedacht sind, mit einer intraoralen Vorrichtung verbunden zu werden,
wobei in das Stirnpolster (1) ein Temperatursensor eingesetzt ist, während ein Drucksensor in das Kinnpolster (2) eingebettet ist.

2. Verfahren zur Herstellung individualisierter Gesichtsmasken nach Anspruch 1, wobei die Stirn- und Kinnpolster (1, 2) unter Verwendung eines biokompatiblen, transparenten, 3D-druckbaren Photopolymers 3D-gedruckt werden.

3. Verfahren zur Herstellung individualisierter Gesichtsmasken nach Anspruch 1, wobei die Stirn- und Kinnpolster (1, 2) unter Verwendung von 3D-druckbaren Silikonen 3D-gedruckt werden.

4. Verfahren zur Herstellung individualisierter Gesichtsmasken nach Anspruch 1, wobei die Stirn- und Kinnpolster (1, 2) unter Verwendung von 3D-druckbarem Polyamid 10, Polyamid 11, Polyamid 12 3D-gedruckt werden.

5. Verfahren zur Herstellung individualisierter Gesichtsmasken nach Anspruch 2, wobei der Mittellinienstab (3) unter Verwendung von Polyamid 12 3D-gedruckt wird.

6. Verfahren zur Herstellung individualisierter Gesichtsmasken nach Anspruch 1, wobei das Kinnpolster (2) einen gepolsterten Gleitmechanismus aufweist, um die Öffnungs- und Schließbewegungen des Unterkiefers zu erleichtern.

7. Verfahren zur Herstellung individualisierter Gesichtsmasken nach Anspruch 1, wobei die Sensoren mit einer Anwendung für Tablets und Smartphones verbunden sind, einschließlich eines Videospiels, das entworfen ist, um die Compliance der Patienten mit dem Tragen der Gesichtsmaske zu verbessern.

## Revendications

1. Procédé de fabrication de masques faciaux personnalisés, en particulier pour le traitement de malocclusions de Classe III comprenant les étapes suivantes :
• la production d'empreintes (1', 2') respectives du front et du menton d'un patient, pour enregistrer la structure anatomique de ceux-ci, à l'aide de matériaux d'empreinte couramment utilisés en dentisterie pour les empreintes intra-buccales ;
• la production d'images numériques en 3D respectives du front et du menton d'un patient par le biais d'un balayage 3d desdites empreintes de front et de menton (1', 2') ;
• l'impression 3D de coussinets de front et de menton (1, 2) personnalisés ;
• la détection d'une ligne de profil latéral (3') du patient à partir d'une image latérale du visage du patient ;
• l'impression 3D d'une tige de ligne médiane modélisée en fonction de ladite ligne de profil ; et
• l'assemblage desdits coussinets de front et de menton et de ladite tige de ligne médiane dans un masque facial présentant un cadre facial assurant un maintien à des bandes élastiques destinées à être reliées à un appareil intra-buccal,
dans lequel, dans le coussinet de front (1) est inséré un capteur de température tandis qu'un capteur de pression est incorporé dans le coussinet de menton (2).

2. Procédé de fabrication de masques faciaux personnalisés selon la revendication 1, dans lequel lesdits coussinets de front et de menton (1, 2) sont imprimés en 3D à l'aide d'un photopolymère biocompatible, transparent et imprimable en 3D.

3. Procédé de fabrication de masques faciaux personnalisés selon la revendication 1, dans lequel lesdits coussinets de front et de menton (1, 2) sont imprimés en 3D à l'aide de silicones imprimables en 3D.

4. Procédé de fabrication de masques faciaux personnalisés selon la revendication 1, dans lequel lesdits coussinets de front et de menton (1, 2) sont imprimés en 3D à l'aide de Polyamide 10, de Polyamide 11, de Polyamide 12 imprimables en 3D.

5. Procédé de fabrication de masques faciaux personnalisés selon la revendication 2, dans lequel ladite tige de ligne médiane (3) est imprimée en 3D à l'aide de Polyamide 12.

6. Procédé de fabrication de masques faciaux personnalisés selon la revendication 1, dans lequel le coussinet de menton (2) comporte un mécanisme coulissant personnalisé, afin de faciliter les déplacements d'ouverture et de fermeture de la mandibule.

7. Procédé de fabrication de masques faciaux personnalisés selon la revendication 1, dans lequel lesdits capteurs sont liés à une application pour tablettes et smartphones comportant un jeu vidéo conçu pour améliorer la conformité des patients au port du masque facial.
